# EUROPÄISCHE PATENTSCHRIFT

(11) **EP 1 794 481 B1**
(45) Veröffentlichungstag und Bekanntmachung des Hinweises auf die Patenterteilung: **03.12.2008**
(21) Anmeldenummer: 04804176.8
(22) Anmeldetag: 22.12.2004
(51) Int. Cl.: F16J 3/04, F16D 3/84, B29C 49/20

(54) **FALTENBALG MIT BEFESTIGUNGSMITTEL**
GAITER WITH FIXING MEANS
SOUFFLET MUNI D'UN MOYEN DE FIXATION

(43) Veröffentlichungstag der Anmeldung: 13.06.2007
(73) Patentinhaber: GKN Driveline International GmbH, 53797 Lohmar (DE)
(72) Erfinder: WETTE, Joachim, 53773 Hennef (DE)
(74) Vertreter: Maxton Langmaack & Partner
(86) Internationale Anmeldenummer: PCT/EP2004/014580
(87) Internationale Veröffentlichungsnummer: WO 2006/074669

(56) Entgegenhaltungen:
- EP-A- 0 487 840
- DE-A1- 10 318 341
- DE-U1- 29 917 271
- FR-A- 2 754 024
- US-A- 3 729 027
- US-A- 5 836 824
- US-B1- 6 558 262

## Beschreibung

Die vorliegende Erfindung betrifft einen Faltenbalg für ein Gelenkbauteil mit einem Faltenbereich in einem wellenseitigen und einem gelenkseitigen Bundbereich mit mindestens einem Befestigungsmittel sowie ein Verfahren zur Herstellung eines derartigen Faltenbalgs.

Faltenbälge stellen flexible und/oder elastische balgartige Abdeckungen für Gelenkbauteile und Antriebswellen dar. Faltenbälge haben insbesondere die Aufgabe, einerseits das Eindringen von Schmutz in das Gelenkbauteil, andererseits jedoch auch den Austritt von Schmiermitteln aus dem Gelenkbauteil zu verhindern. Daher werden Faltenbälge mit aus dem Stand der Technik bekannten Befestigungsmitteln, insbesondere Spann- bzw. Klemmelementen sowie Kompressionsringen, wellen- und gelenkseitig befestigt. Der hiermit verbundene Montageaufwand ist relativ hoch, und es besteht daher der Wunsch, die Montage einfacher zu gestalten. Aus DE 199 56 591 C1 ist eine Schlauchverbindung insbesondere in Form eines Formschlauchs oder eines Balges bekannt mit je einer Schlauchschelle an den beiden Schlauchenden zum klemmenden Befestigen der Schlauchenden an Rohrstutzen, Wellen oder ähnlichen zylindrischen Bauteilen, wobei die Schlauchschelle einvulkanisiert ist und Ringschultern aus einem Kunststoffmaterial zur Führung eines die Ringschelle stauchenden Werkzeugs vorgesehen sind. Diese Schlauchverbindung ist vorteilhafterweise vor Korrosion geschützt und ermöglicht eine vereinfachte Montage insbesondere bei Ausbildung eines Faltenbalgs auf einem Gelenkbauteil bzw. einer Welle. Nachteilig an dem Gegenstand der DE 199 56 599 Ca ist jedoch, dass das zur Schließung bzw. zum Festziehen der Schlauchschelle verwendete Werkzeug im Bereich der einvulkantsierten Schlauchschelle zunächst mit einer Kunststoffschicht in Kontakt tritt. Durch Anwendung von Druck über das Schließwerkzeug kann das Kunststoffmaterial zu fließen beginnen, so dass letztendlich die Schließkräfte über das Schileßwerkzeug ungleichmäßig auf die einvulkanisierte Schlauchschelle übertragen wert den. Denn durch das Fließen des Kunststoffmaterials können örtlich unterschiedliche Druckspitzen entstehen, Letztendlich wird mit dem in der DE 199 56 591 C1 offenbarten Gegenstand nachteilig in Kauf genommen, dass sich die dichtende Wirkung insbesondere bei Ausbildung eines Faltenbalgs verschlechtert.

EP-A-0 487 840 offenbart einen Faltenbalg aus thermoplastischem Elastomer mit gegenüberliegenden Einspannstellen, von denen zumindest eine überwiegend aus elastomerem Material besteht, welches mit dem thermoplastischen Elastomer unlösbar verbunden ist. Technisch kann zur Herstellung eines entsprechenden Faltenbalges derart vorgegangen werden, dass der Faltenbalg durch Spritzblasen, Spritzextrudieren oder Extrusionsblasformen hergestellt wird, wobei zuvor in die Form ringförmige Teile aus Gummi an den beiden zukünftigen Einspannstellen eingelegt werden. Beim Aufblasen des Rohlings in der Form drückt sich das thermoplastische Material gegen die Werkzeugwand und damit gegen die Gummiringe, wobei eine unlösbare Verbindung zwischen beiden Werkstoffen eingegangen wird.

FR-A-2 754 024 offenbart eine Dichtungsmanschette, welche insbesondere als Faltenbalg ausgebildet werden kann, wobei in den Faltenbalg Verstärkungselemente aus Metall eingearbeitet sind, welche ganz oder teilweise im Bundbereich des Faltenbalges aufgenommen sein können. Der Faltenbalg mit diesen Verstärkungselementen kann derart hergestellt werden, dass das Verstärkungselement mit elastomerem Material umschmolzen wird, wobei das Verstärkungselement in einer Werkzeugform angeordnet sein kann,

Es ist daher Aufgabe der vorliegenden Erfindung, ein Verfahren zur Herstellung eines Faltenbalgs zur Verfügung zu stellen, wobei dieser Faltenbalg einerseits leichter zu montieren ist und andererseits die aus dem Stand der Technik bekannten Nachteile nicht aufweist.

Zur Lösung dieser Aufgabe wird erfindungsgemäß ein Verfahren zur Herstellung eines Faltenbalgs vorgeschlagen, wobei im Bereich einer ersten Einspannstelle eines Verarbeitungswerkzeugs ein Befestigungsmittel unmittelbar anliegend mit seiner Außenseite an der ersten Einspannstelle angeordnet ist und nachfolgend der Faltenbalg aus einem Kunststoffmaterial gebildet wird, wobei das Befestigungsmittel mit dem Kunststoffmaterial in Kontakt kommt und von diesem zumindest teilweise umgeben wird, so dass die Ränder des als Spannband, Kompressionsring oder Klemmschelle ausgebildeten Befestigungsmittels entweder freiliegen oder teilweise mit Kunststoffmaterial umgeben sind. Die einteilige Ausbildung des Befestigungsmittels mit dem Faltenbalg als vormontiertes System kann auf diese Art und Weise einfachst erzielt werden. Durch die erfolgte Schrumpfung des Kunststoffmaterials nach Entnahme desselben aus dem Verarbeitungswerkzeug kann dabei, soweit kein Primer eingesetzt wird, dem Befestigungsmittel ein gewisses Spiel verliehen werden, gleichwohl wird das Befestigungsmittel sicher im Bundbereich gehalten. Zur Erzielung einer sicheren und dauerhaft und in aller Regel auch unlösbaren Verbindung zwischen dem Befestigungsmittel und dem Bundbereich des Faltenbalgs können Primer oder ähnliche haftverstärkende Materialien eingesetzt werden. Die Außenseite des Befestigungsmittels im vorstehend genannten Sinne ist als auf den fertig hergestellten Faltenbalg bezogen zu verstehen, weist also allenfalls in Teilbereichen eine Kunststoffbeschichtung auf, so dass ein Befestigungs- bzw. Schließwerkzeug sicher am Befestigungsmittel angreifen kann und ein gleichmäßiger Druck zur Schließung des Befestigungsmittels ausgeübt wird.

Der solchermaßen hergestellte Faltenbalg für ein Gelenkbauteil mit einem Faltenbereich in einem wellenseitigen und einem gelenkseitigen Bundbereich und mindestens einem den Faltenbalg in einem Bundbereich an einem Gelenkaußenteil oder einer Welle fixierenden, im Wesentlichen band- und/oder ringförmigen Befestigungsmittel, weist ein einteilig mit dem Bundbereich verbundenes Befestigungsmittel auf, wozu bei der Herstellung des Faltenbalgs das Befestigungsmittel in ein Verarbeitungswerkzeug eingelegt und von Kunststoffmaterial zumindest teilweise umgeben wird, und die dem Bundbereich abgewandte Seite des Befestigungsmittels zum Angreifen eines Befestigungswerkzeug angeboten ist. Dabei ist bevorzugt die dem Bundbereich abgewandte Seite des Befestigungsmittels aus einem metallischen Material gebildet. Hierdurch ist ein sicheres Angreifen eines Befestigungswerkzeugs möglich. Aber auch eine Ausbildung des Befestigungsmittels im Ganzen oder aber lediglich der dem Bundbereich abgewandten Seite aus einem Kunststoffmaterial ist möglich.

Der große Vorteil des solchermaßen hergestellten Faltenbalgs liegt darin, dass dieser einfach herstellbar ist, da insbesondere im Bundbereich des Faltenbalgs nicht aufwändige Haltemittel, Positionierelemente o.ä. vorgesehen sein müssen und daher einfacher ausgebildet sein können. Zudem stellen die entsprechend ausgebildeten Positionier-, Halte- oder Fixierelemente im Bundbereich stets ein Problem dar, da durch Anziehen des Befestigungsmittels, welches vorzugsweise als Spannband ausgebildet ist, aber auch ein aus dem Stand der Technik bekannter Kompressionsring oder eine Klemmschelle sein kann, je nach verwendetem Kunststoffmaterial für den Bundbereich dieses zu fließen beginnt, wodurch Dichtigkeitsprobleme auftreten können. Insbesondere treten auch unterschiedliche Druckspitzen auf, so dass auch dies bei den aus dem Stand der Technik bekannten, relativ aufwändig ausgebildeten Bundelementen nachteilig ist. In besonders vorteilhafter Weise kann bei dem Faltenbalg das Befestigungswerkzeug unmittelbar am Befestigungselement angreifen, so dass hier ebenfalls sicher ein Fließen eines Kunststoffmaterials, welches noch zwischen dem Befestigungselement und dem Befestigungswerkzeug angeordnet sein kann, vermieden und ein gleichmäßiges und sicheres Schließen des Befestigungsmittels sichergestellt ist.

"Zumindest teilweise umgeben" im Sinne der vorliegenden Erfindung heißt, dass zumindest Teilbereiche des Befestigungsmittels mit Kunststoffmaterial in Kontakt kommen. Dabei kann lediglich eine Teilfläche der dem Bundbereich zugewandten Innenseite des Befestigungsmittels mit dem Kunststoffmaterial in Kontakt kommen, es können jedoch auch die Ränder des Befestigungsmittels zumindest teilweise, aber auch die Außenseite des Befestigungsmittels zumindest teilweise mit Kunststoffmaterial, insbesondere zu den Rändern hin, in Kontakt kommen und von diesem umgeben werden.

Einteilig im Sinne der vorliegenden Erfindung bedeutet, dass der Faltenbalg und das Befestigungsmittel eine Einheit bilden, so dass das Befestigungsmittel vormontiert am Faltenbalg gehalten ist. Dabei kann allerdings das Befestigungsmittel im unmontierten Zustand des Faltenbalgs von diesem unter Aufwendung von Kraft und aufgrund der Elastizität des für die Herstellung von Faltenbälgen eingesetzten Kunststoffmaterials von diesem abgezogen und wieder aufgesetzt werden. Einteilig im Sinne der vorliegenden Erfindung heißt dabei insbesondere nicht, dass das Befestigungsmittel unlösbar mit dem Faltenbalg verbunden ist, wobei dies jedoch auch der Fall sein kann. Das Befestigungsmittel liegt mit seinen Rändern bevorzugt zumindest teilweise am Bundbereich des Faltenbalgs an. Demgemäß weist der Bundbereich des Faltenbalgs zwei, vorteilhafterweise Insbesondere in Umfangsrichtung desselben durchgehend umlaufende Flanken auf, an welchen die Ränder des Befestigungsmittels anliegen. Bei der Herstellung des Faltenbalges wird infolge der Schrumpfung des Kunststoffmaterials nach Abkühlung desselben dem Befestigungsmittel ein Spiel vermittelt, wodurch dieses in der gebildeten Ringnut bewegbar ist. Alternativ kann jedoch auch vorgesehen sein, dass das Befestigungsmittel nicht nur einteilig mit dem Faltenbalg verbunden ist, sondern einteilig fest, d.h. dass insbesondere durch eine Anvulkanisation des Befestigungsmittels zumindest auf dessen dem Bundbereich zugewandten Innenseite, aber auch im Bereich der beiden Ränder des Befestigungsmittels, eine im Wesentlichen unlösbare Verbindung erhalten wird. Dies kann insbesondere durch Einsatz von Primem, welche bevorzugt auf dem Befestigungsmittel vor oder nach Einlegung desselben in das Verarbeitungswerkzeug aufgebracht werden, erfolgen. Dabei kann der Primer im Hinblick auf das verwendete Material für das Befestigungsmittels als auch das eingesetzte Kunststoffmaterial, welches der Innenseite des Befestigungsmittels zugewandt ist, ausgewählt sein. Allenfalls durch eine in Kauf genommene Teilzerstörung des Bundbereichs des Faltenbalgs könnte das Befestigungsmittel dann wieder von diesem gelöst werden. Im Falle einer einteilig festen Verbindung ist es nicht notwendig, dass die Ränder des Befestigungsmittels zumindest teilweise am Bundbereich anliegen. Auf eine Justierung durch im Bundbereich eines Faltenbalgs angeordnete Flanken, welche auf der gelenkwellenseitigen und faltenbalgseitigen Seite einer Ringnut angeordnet sein können, kann dann verzichtet werden.

Sind die Ränder des Befestigungsmittels nur teilweise von Kunststoffmaterial umgeben, so kann ein anzusetzendes Schließwerkzeug durch das überstehende Profil des Befestigungsmittels eine Führung erlangen. In einer weiteren nicht erfindungsgemäßen Ausführungsform kann auch vorgesehen sein, dass das Kunststoffmaterial im Bereich der Ränder des Befestigungsmittels über die durch die Außenseite des Befestigungsmittels definierte Ebene hervorsteht. Diese Vorsprünge können dann insbesondere als umlaufende Ringwulste angesprochen werden, welche ebenfalls einem anzusetzenden Schließwerkzeug eine Führung ermöglichen. Ebenfalls unter den Gegenstand der vorliegenden Erfindung fällt eine Ausführungsform, bei welcher auf der Außenseite des Befestigungsmittels zu den Rändern desselben hin Kunststoffmaterial angeordnet ist. Wesentlich bei dieser Ausführungsform ist, dass zumindest ein ausreichend breiter Bereich des Befestigungsmittels zum Angreifen des anzusetzenden Schließwerkzeugs frei von Kunststoffmaterial bleibt.

Bevorzugt ist der Faltenbalg aus einem thermoplastischelastomeren oder elastomeren Material hergestellt. Weiter bevorzugt sind thermoplastischelastomere Materialien. Hierbei handelt es sich um aus dem Stand der Technik bekannte Werkstoffe, welche zwei unterschiedliche Polymersegmente aufweisen, nämlich ein relativ starres Harzsegment sowie ein elastisches Weichsegment. Die einzelnen Polymersegmente sind dabei aus längeren Ketten gleichartiger Monomerer gebildet. Die Harzsegmente halten die Weichsegmente durch physikalische, netzartige Bindungen zusammen. Ein bekanntes thermoplastischelastomeres Material zur Herstellung von Faltenbälgen ist das unter dem Markennamen "HYTREL" vertriebene Kunststoffmaterial der Firma Dupont.

In einer weiter bevorzugten Ausführungsform ist der Bundbereich des Faltenbalgs zumindest teilweise aus einem elastomeren Material hergestellt. Elastomeres Material weist im Unterschied zu thermoplastischelastomeren Material den Vorteil auf, dass dieses bei Anordnung unterhalb des Befestigungselements einen verringerten sogenannten "kalten Fluss" aufweist. Hierunter ist das Phänomen zu verstehen, dass unter Einspannung das Kunststoffmaterial an den Bundbereichen seitlich des Befestigungsmittels "wegläuft", so dass sich im Betrieb der Faltenbalg insbesondere bei thermischer Beanspruchung lockern kann. Wird zumindest der unterhalb des Befestigungsmittels liegende Bereich des Bundes aus einem elastomeren Material hergestellt, so lassen sich die vorstehend genannten Nachteile sicher vermeiden. Übrige Bereiche des Bundbereichs können gleichwohl aus einem thermoplastischelastomeren Material hergestellt sein. Derselbe Vorteil kann auch erreicht werden, wenn eine Schicht eines thermoplastischelastomeren Materials unterhalb des elastomeren Materials angeordnet wird. Mögliche, als elastomere Materialien einsetzbare Kunststoffe oder Mischungen sind beispielsweise Urethan-Kautschuke, beispielsweise thermoplastische Polyurethane mit Polyester als Polyol-Komponente, oder Urethan-Kautschuk-Mischungen auf Polyesterbasis, oder Polychloroprene.

Vorteilhafterweise ist der Bundbereich des Faltenbalgs aus einer Schicht eines thermoplastischelastomeren Materials und einer Schicht eines elastomeren Materials zumindest teilweise gebildet. Hierdurch lassen sich zum überwiegenden Teil die bekannten Nachteile aus der Verwendung thermoplastischelastomerer Materialien im Einspannbereich des Bundes vermeiden. Dabei kann auch vorgesehen sein, dass die aus einem elastomeren Material gebildete Schicht einteilig fest mit dem Befestigungsmittel verbunden ist.

In einer bevorzugten Ausführungsform des erfindungsgemäßen Verfahrens ist zusätzlich an der Innenseite des Befestigungsmittels ein erster Ring aus einem elastomeren Material in der ersten Einspannstelle angeordnet. Dabei können in die erste Einspannstelle der erste Ring als auch das Befestigungsmittel zusammen oder nacheinander eingelegt werden. Diese können auch bereits vorher, gegebenenfalls auch lösbar, miteinander verbunden werden, beispielsweise durch eine erfolgte Anvulkanisation oder durch Aufbringung eines entsprechenden Klebemittels. Durch das Einlegen des Rings aus elastomerem Material als auch des Befestigungsmittels in der ersten Einspannstelle ist ermöglicht, den Bundbereich eines Faltenbalgs derart auszugestalten, dass dieser im Wesentlichen im Bereich unterhalb des Befestigungsmittels aus einem elastomeren Material zur Verhinderung des Phänomens des "kalten Flusses" besteht. Grundsätzlich weist das Verarbeitungswerkzeug zur Herstellung des Faltenbalgs zwei Einspannstellen auf, wobei die eine Einspannstelle im Wesentlichen dem wellenseitigen Bundbereich des fertigen Faltenbalgs, die weitere Einspannstelle hingegen im Wesentlichen dem gelenkseitigen Bundbereich des fertig hergestellten Faltenbalgs entspricht. Die erste Einspannstelle kann demgemäß sowohl dem wellenseitigen als auch dem gelenkseitigen Bundbereich des fertig hergestellten Faltenbalgs entsprechen. Dabei ist insbesondere vorteilhaft die Einspannstelle, welche dem wellenseitigen Bundbereich entspricht, ein- oder mehrteilig ausgebildet und weist bevorzugt drei, gegebenenfalls aber auch mehrere Backen auf.

Vorteilhafterweise wird bei der Herstellung des erfindungsgemäßen Faltenbalges durch das erfindungsgemäße Verfahren durch das Verarbeitungswerkzeug in den Einspannstellen ein Freiraum abgedeckt, welcher auf einer Seite definiert ist durch die sich im Bundbereich bildende faltenseitige Ringnutflanke und auf der dieser entgegengesetzten Seite definiert ist durch den faltenseitigen Rand des Befestigungsmittels. Das Befestigungsmittel wird also in die Einspannstellen derart eingelegt, dass dort insbesondere auf der jeweiligen faltenseitigen Seite das Profil der Einspannstellen des Verarbeitungswerkzeugs derart definiert ist, dass dort eben der entsprechende Freiraum gebildet werden kann.

Vorzugsweise ist vorgesehen, dass ein weiteres Befestigungsmittel mit seiner Außenseite im Bereich des der ersten Einspannstelle entgegengesetzten Teils des Verarbeitungswerkzeugs anliegend an eine zweite Einspannstelle angeordnet wird. Hierdurch können in einem einzigen Verfahrensschritt Faltenbälge erhalten werden, welche sowohl auf der wellenseitigen als auch auf der gelenkseitigen Seite in den dortigen Bundbereichen ein einteilig, gegebenenfalls einteilig fest, mit diesem verbundenes Befestigungsmittel aufweisen. Vorzugsweise ist vorgesehen, dass zusätzlich an der Innenseite des weiteren Befestigungsmittels ein zweiter Ring aus einem elastomeren Material angeordnet wird. Auf diese Weise können beide Bundbereiche eines Faltenbalgs im Bereich unterhalb der Befestigungsmittel im Wesentlichen mit einem elastomeren Material zur Verhinderung des Phänomens des "kalten Flusses" ausgestattet werden. Besonders bevorzugt ist eine Ausführungsform des erfindungsgemäßen Verfahrens, bei welchem in der ersten und der zweiten Einspannstelle jeweils ein Befestigungsmittel eingelegt wird.

Das erfindungsgemäße Verfahren wird vorzugsweise als Pressblow-Spritzblasverfahren, für das entsprechende Vorrichtungen beispielsweise von der Firma Ossberger GmbH & Co., Weißenburg, Deutschland, verwendet werden können, als Spritzextrusionsverfahren, Spritzgussverfahren, Spritzpressverfahren und/oder als Extrusionsblasformverfahren durchgeführt werden. Das Pressblow-Spritzblasverfahren-und das Spritzextrusionsverfahren sind weitgehend identisch ausgebildet. Beide sind bevorzugt, da insbesondere beim Extrusionsblasformverfahren die Schwierigkeit besteht, dass das Einbringen des Befestigungsmittels bzw. gegebenenfalls auch des zusätzlichen Rings aus einem elastomeren Material erfolgen muss durch Überziehen über den extrudierten, an einer Düse hängenden Schlauch. Darüber hinaus lassen sich mit dem Pressblow-Spritzblasverfahren/Spritzextrusionsverfahren maßgenaue Faltenbälge erzielen.

Diese und weitere Vorteile der vorliegenden Erfindung werden anhand der folgenden Figuren erläutert. Es zeigen:
- Fig. 1:: eine Teilschnittansicht eines Gelenkbauteils mit einem Faltenbalg in einer ersten Ausführungsform;
- Fig. 2:: eine Teilschnittansicht eines Gelenkbauteils mit einem Faltenbalg in einer zweiten Ausführungsform;
- Fig. 3:: eine Teilschnittansicht einer Pressblow-Spritzblasvorrichtung zur Herstellung eines erfindungsgemäßen Faltenbalgs in einem ersten Betriebszustand;
- Fig. 4:: eine Teilschnittansicht der in Fig. 3 gezeigten Pressblow-Spritzblasvorrichtung in einem zweiten Betriebszustand;
- Fig. 5:: eine Teilschnittansicht der in den Fig. 3 und 4 gezeigten Pressblow-Spritzblasvorrichtung in einem geschlossenen, dritten Betriebszustand;
- Fig. 6:: eine Schnittansicht durch eine Spritzextrusionsvorrichtung in geöffneter, erster Arbeitsstellung;
- Fig. 7:: eine Teilschnittansicht der in Fig. 6 gezeigten Spritzextrusionsvorrichtung in einer zweiten Arbeitsstellung;
- Fig. 8:: eine Schnittansicht der in den Fig. 6 und 7 gezeigten Spritzextrusionsvorrichtung mit gebildetem Vorformling in einer dritten Arbeitsstellung;
- Fig. 9:: eine Schnittansicht der in den Fig. 6 bis 8 gezeigten Spritzextrusionsvorrichtung mit sich schließendem Blasformwerkzeug in einer vierten Arbeitsstellung; und
- Fig. 10:: eine Schnittansicht der in den Fig. 6 bis 9 gezeigten Spritzextrusionsvorrichtung mit geschlossenem Blasformwerkzeug und gebildetem Faltenbalg in einer fünften Arbeitsstellung.

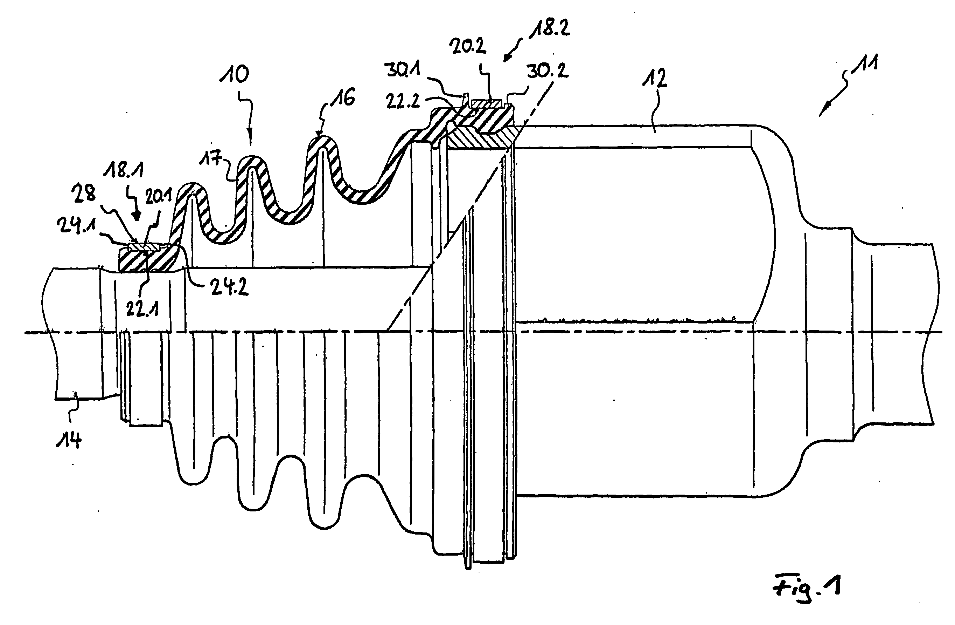

Fig. 1 zeigt ein insgesamt mit dem Bezugszeichen 11 bezeichnetes Gelenkbauteil, umfassend einen Faltenbalg 10, eine Welle 14 und ein Gelenkaußenteil 12. Das Gelenkinnenteil ist nicht näher gezeigt. Der Faltenbalg 10 weist mehrere Falten 17 auf sowie einen wellenseitigen Bundbereich 18.1 und einen gelenkaußenteilseitigen Bundbereich 18.2. Der Bundbereich 18.2 ist mittels eines ringförmigen Befestigungsmittels 20.1, ausgebildet als Spannband, auf der Welle 14 fixiert. Entsprechend ist durch das Befestigungsmittel 20.2, ebenfalls als Spannband ausgebildet, der Bundbereich 18.2 auf dem Gelenkaußenteil 12 fixiert.

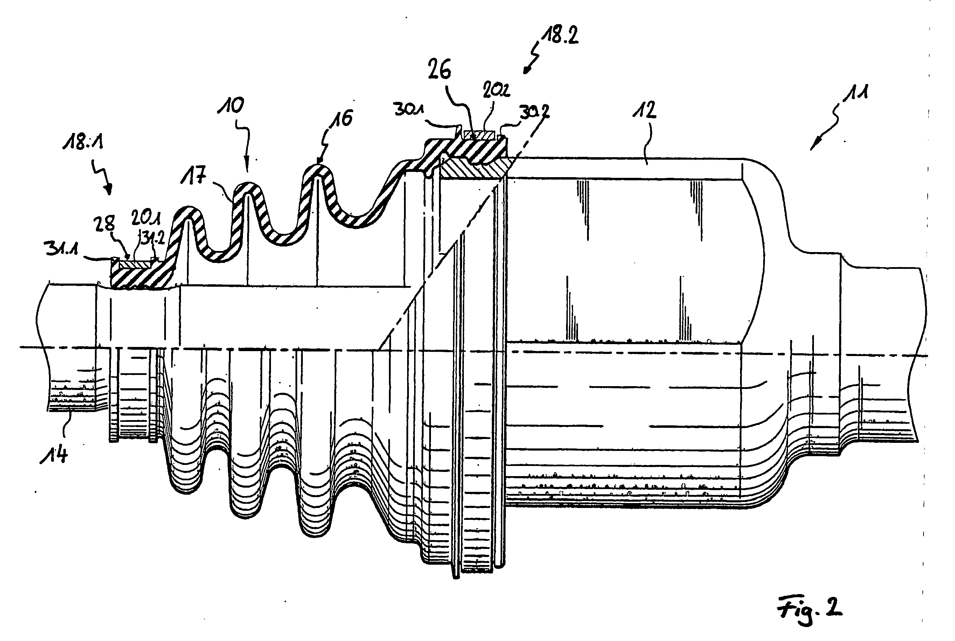

Das Befestigungsmittel 20.1 und 20.2 ist mit dem entsprechenden Bundbereich 18.1 und 18.2 einteilig verbunden, das Befestigungsmittel 20.2 insbesondere einteilig fest durch Anvulkanisation bei der Herstellung des Faltenbalgs 10. Die Innenseiten 22.1 und 22.2 der Befestigungsmittel 20.1 und 20.2 sind dem Boden 26 (siehe Fig. 2) einer bei der Herstellung des Faltenbalgs 10 in den Bundbereichen 18.1 und 18.2 erzeugten Ringnut zugewandt angeordnet. Die Außenseiten 28 der Befestigungsmittel 20.1 und 20.2 liegen frei, so dass hier ein Schließwerkzeug unmittelbar an die Befestigungsmittel 20.1 und 20.2 angreifen kann.

Im Bundbereich 18.1 ist das Spannband 20.1 an seinem faltenabseitigen Rand 24.1 und seinem dem Faltenbereich 16 zugewandten Rand 24.2 teilweise etwa zur Hälfte mit Kunststoffmaterial des Faltenbalgs 10 umgeben. Hierdurch ragt das Profil des Spannbandes 20.1 über die durch das Kunststoffmaterial des Faltenbalgs 10 gebildete Ebene hinaus, so dass hierdurch einem angreifenden Schließwerkzeug eine Führung gegeben wird.

Der Bundbereich 18.2. ist anders ausgebildet derart, dass die Ränder des Spannmittels 20.2 freiliegen, so dass lediglich die Innenseite 22.2 des Befestigungsmittels 20.2 unmittelbar mit dem Kunststoffmaterial des Bundbereichs 18.2 in Kontakt steht und mit diesem einteilig fest verbunden ist. Auf der faltenabseitigen Seite des Bundbereichs 18.2 als auch auf der dem Faltenbereich 16 zugewandten Seite des Bundbereichs 18.2 sind Ringwulste 30.1 und 30.2 angeordnet, welche bevorzugt durchgehend umlaufend über den gesamten Bundbereich 18.2 ausgebildet sind. Dabei ist der Ringwulst 30.1 derart ausgebildet, dass dieser die durch die Außenseite des Befestigungsmittels 20.2 gebildete Ebene überragt, so dass dem angreifenden Schließwerkzeug (nicht gezeigt) hier ebenfalls eine sichere Führung gegeben wird.

Fig. 2 zeigt eine zweite Ausführungsform eines auf einem Gelenkbauteil 11 montierten Faltenbalgs 10, wobei hier im Unterschied zu der in Fig. 1 gezeigten Ausführungsform der Bundbereich 18.1 derart ausgebildet ist, dass sowohl auf der dem Faltenbereich 16 abgewandten Seite des Bundbereichs 18.1 als auch der dem Faltenbereich 16 zugewandten Seite des Bundbereichs 18.1 umlaufend ein Ringwulst 31.1 und ein Ringwulst 31.2 angeordnet sind, wobei diese über die durch die Außenseite 28 des Befestigungsmittels 20.1 gebildete Ebene hinausragen. Durch die spezielle Ausbildung der Ringwulste 31.1 und 31.2 wird einem angreifenden Schließwerkzeug zur Schließung des Spannbandes 20.1 eine Führung gegeben, so dass ein sicheres und gleichmäßiges Schließen des Spannbandes 20.1 ermöglicht ist.

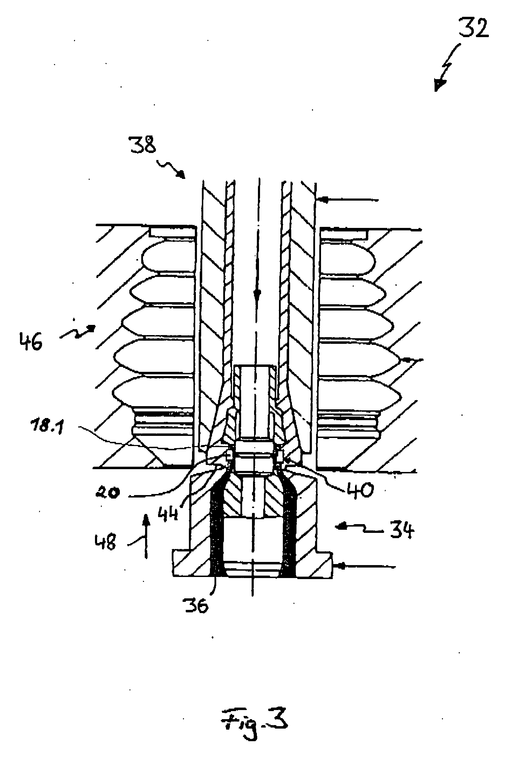

Das erfindungsgemäße Verfahren wird nun anhand eines Pressblow-Spritzblasverfahrens/Spritzextrusionsverfahrens gemäß den Fig. 3 bis 5 erläutert.

Fig. 3 zeigt in einer Schnittansicht eine insgesamt mit dem Bezugszeichen 32 bezeichnete Pressblow-Spritzblasvorrichtung, umfassend einen Schmelzzuführungskopf 34, ein Spritzgießwerkzeug 38 zur Ausbildung des wellenseitigen Bundbereichs 18.1, sowie ein Blasformwerkzeug 46 in geöffneter Stellung. Das Spritzgießwerkzeug 38 weist eine Zange 44 mit üblicherweise drei, gegebenenfalls jedoch auch mehr Backen auf, wodurch eine Einspannstelle 40 zur Aufnahme eines Befestigungsmittels 20 definiert ist. Dabei weisen die Backenflächen eine treppenartige Außenkontur auf, wodurch das Befestigungsmittel 20 einerseits aufnehmbar ist, andererseits - wie auch in Fig. 1 gezeigt - ein wellenseitiger Bundbereich 18.1 geschaffen werden kann, bei welchem die durch die Außenseite des Befestigungsmittels 20.1 gebildete Ebene über die durch das Kunststoffmaterial vorgegebene hervorragt. Kunststoffmaterial wird in Form einer Schmelze 36 über den Schmelzzuführungskopf 34 dem Spritzgießwerkzeug 38 zugeführt und füllt den an der Einspannstelle 40 vorliegenden Raum mit der Schmelze 36. Anschließend wird in Richtung des Pfeils 48 das Spritzgießwerkzeug 38 bewegt.

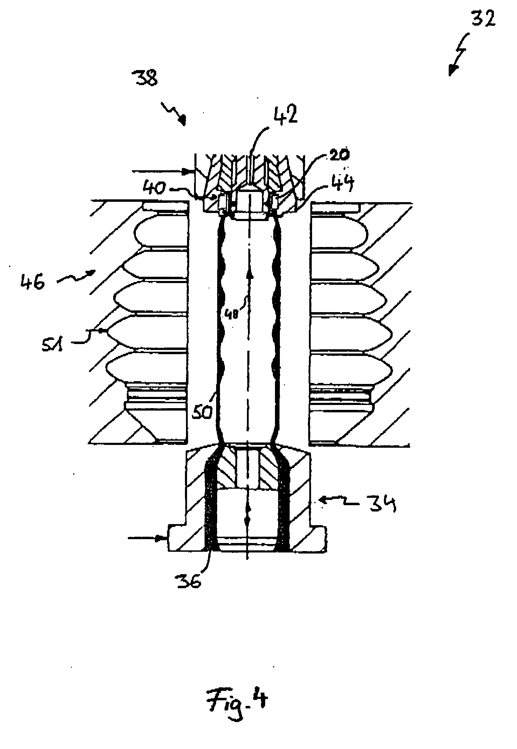

Gemäß Fig. 4 erfolgt die Bewegung des Spritzgießwerkzeugs 38 bis zu einer Endstellung in etwa oberhalb des Blasformwerkzeugs 46. Gleichzeitig mit dem Ziehen des Spritzgießwerkzeugs 38 wird aus der Schmelze 36 mit einer gewünschten Wanddickenverteilung ein Vorformling 50 gebildet. Dabei kann die Wanddickenverteilung in aller Regel elektronisch über ein Programm gesteuert werden, wobei hier wesentlich die Düsenkegelverstellung als auch das Auspressen der Schmelze 36 aus dem Speicher des Schmelzzuführungskopfes 34 ist. Des Weiteren ist Fig. 4 zu entnehmen, dass das Spritzgießwerkzeug 38 einen Blasdorn 42 aufweist, durch welchen Blasluft geführt werden kann. Nach Bildung des Vorformlings 50 mit gewünschter Wanddickenverteilung wird das Blasformwerkzeug 46 in Richtung des Pfeils 51 geschlossen.

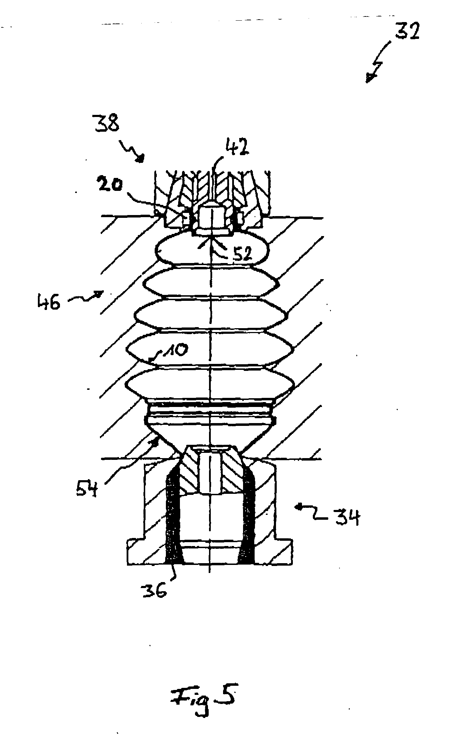

Fig. 5 zeigt in Schnittansicht die Pressblow-Spritzblasvorrichtung nach Schließen des Blasformwerkzeugs 46 und Einblasen von Blasluft gemäß den Pfeilen 52 über den Blasdorn 42 des Spritzgießwerkzeugs 38. Hierdurch wird der Vorformling 50 aufgeblasen und legt sich zur Bildung eines Faltenbalgs 10 der Außenkontur des Blasformwerkzeugs 46 an. In dem dem Schmelzzuführungskopf 34 zugewandten Bereich des Blasformwerkzeugs 46 wird ein Angussbutzen 54 ausgebildet, welcher nach Öffnung des Blasformwerkzeugs 46 durch Abschneiden einfach entfernt werden kann.

Mittels des in den Fig. 3 bis 5 gezeigten Pressblow-Spritzblasverfahrens wurde somit ein Faltenbalg 10 mit einem im wellenseitigen Bundbereich 18.1 angeordneten Befestigungsmittel 20 in Übereinstimmung mit der in Fig. 1 gezeigten Ausführungsform erzeugt.

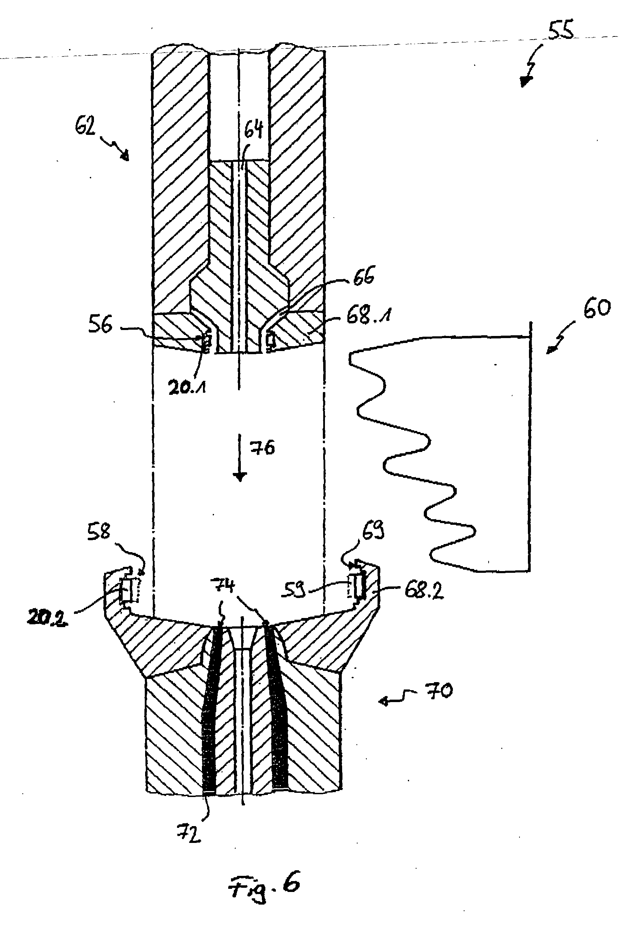

Die Fig. 6 bis 10 zeigen die Herstellung eines Faltenbalgs mit zwei Befestigungsmitteln anhand des Spritzextrusionsverfahrens.

Dabei zeigt Fig. 6 in Schnittansicht eine Spritzextrusionsvorrichtung 55, umfassend ein Blasformwerkzeug 60 (lediglich schematisch dargestellt), sowie ein Spritzgießwerkzeug 62 und diesem entgegengesetzt angeordnet ein Schmelzzuführungskopf 70. Das Spritzgießwerkzeug 62 weist einen Blasdorn 64 sowie eine oder mehrere Backen 68.1 auf, wobei durch die Backen 68.1 und den Blasdorn 64 eine Einspannstelle 56 definiert ist. Dabei weisen die Backen 68.1 eine treppenartige Außenkontur zur Aufnahme eines ringförmigen Befestigungsmittels 20.1, z. B. eines Spannbandes oder Kompressionsrings, auf. Hierdurch kann eine Anordnung des Befestigungsmittels 20.1 im wellenseitigen Bundbereich 18.1 eines Faltenbalgs 10 erzielt werden, wie dies auch in Fig. 1 dargestellt ist. Der dem Spritzgießwerkzeug 62 gegenüber angeordnete weitere Teil der Spritzextrusionsvorrichtung 55, nämlich der Schmelzzuführungskopf 70, weist eine Ringdüse 74 auf, über welche geschmolzenes Kunststoffmaterial 72 zuführbar ist. Des Weiteren weist der Schmelzzuführungskopf 70 eine oder mehrere Backen 68.2 auf, welche an ihrer Innenseite eine Außenkontur 69 aufweisen, die ebenso wie bei der oberen Backe 68.1 treppenartig ausgebildet ist. Durch die durch die Außenkontur 69 der Backen 68.2 gebildete Einspannstelle 58 Ist ein weiteres Befestigungsmittel 20.2, nämlich ein Spannband, angeordnet. Angedeutet ist des Weiteren in Fig. 2, dass unmittelbar benachbart und anliegend an das Spannband 20.2 ein Elastomerring 59 angeordnet werden kann, welcher beispielsweise aus einem Urethan-Kautschuk gebildet sein kann. Dieser Elastomerring 59 kann z.B. mittels Klebemittel auf dem Spannband 20.2 vormontiert und daher zusammen mit diesem in der Einspannstelle 58 der Spritzextrusionsvorrichtung 55 eingelegt sein. Nach Einlegen der Spannbänder 20.1 und 20.2 sowie gegebenenfalls des Formrings 59, welcher im Übrigen auch mit anderen Abmessungen dem Spannband 20.1 benachbart angeordnet sein kann, fährt das Spritzgießwerkzeug 62 in Richtung des Pfeils 76 auf den Schmelzzuführungskopf 70 zu.

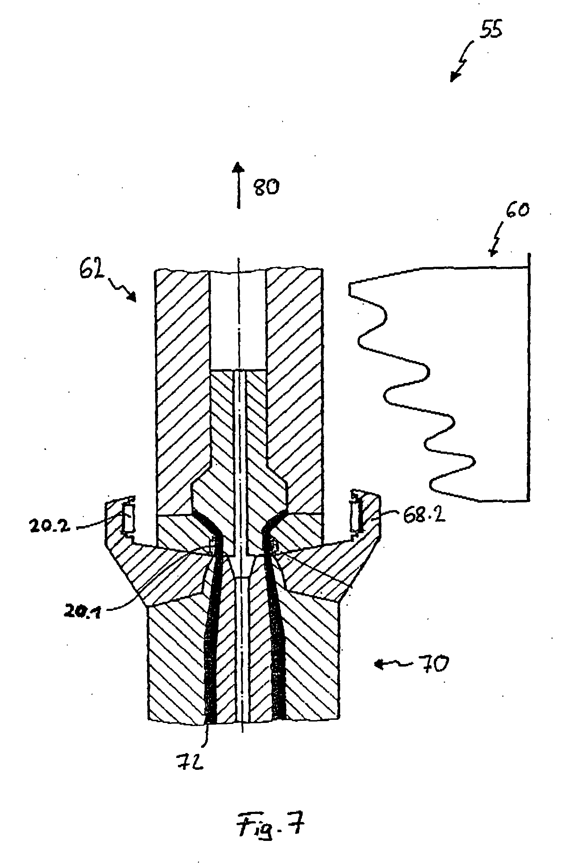

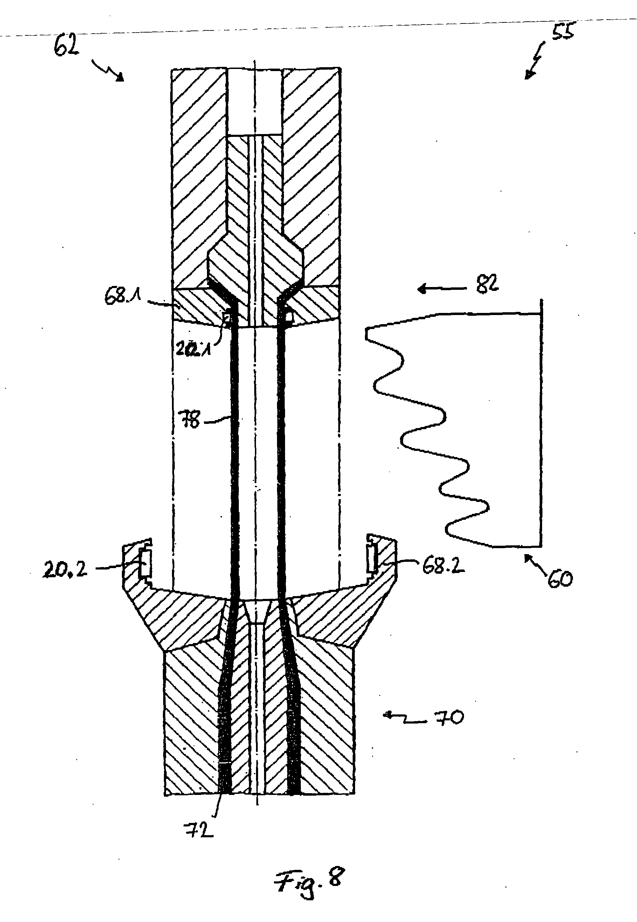

Fig. 7 zeigt die Spritzextrusionsvorrichtung 55 in einer zweiten Arbeitsstellung nach Bewegung des Spritzgießwerkzeugs 62 auf den Schmelzzuführungskopf 70. Schmelze 72 ist nun in den Freiraum 66 im Spritzgießwerkzeug 62 eingespritzt worden, wodurch eine einteilige Verbindung des Befestigungsmittels 20.1 mit dem Kunststoffmaterial erfolgt. Anschließend wird in Richtung des Pfeils 80 das Spritzgießwerkzeug 62 bewegt zur Bildung eines Vorformlings 78 (siehe Fig. 8).

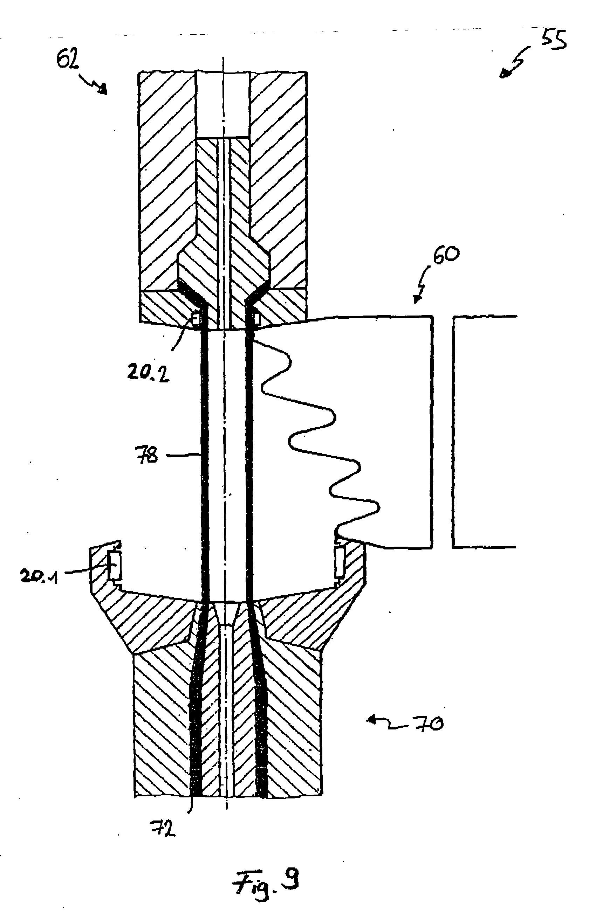

Fig. 8 zeigt in einer dritten Arbeitsstellung die Spritzextrusionsvorrichtung 55 mit dem zwischen dem Spritzgießwerkzeug 62 und dem Schmelzzuführungskopf 70 gespannten Vorformling 78. Bei einer Bewegung des Blasformwerkzeugs 60 in Richtung des Pfeils 82 wird nun die Spritzextrusionsvorrichtung 55 geschlossen. Dies ist in Fig. 9 zumindest einseitig gezeigt.

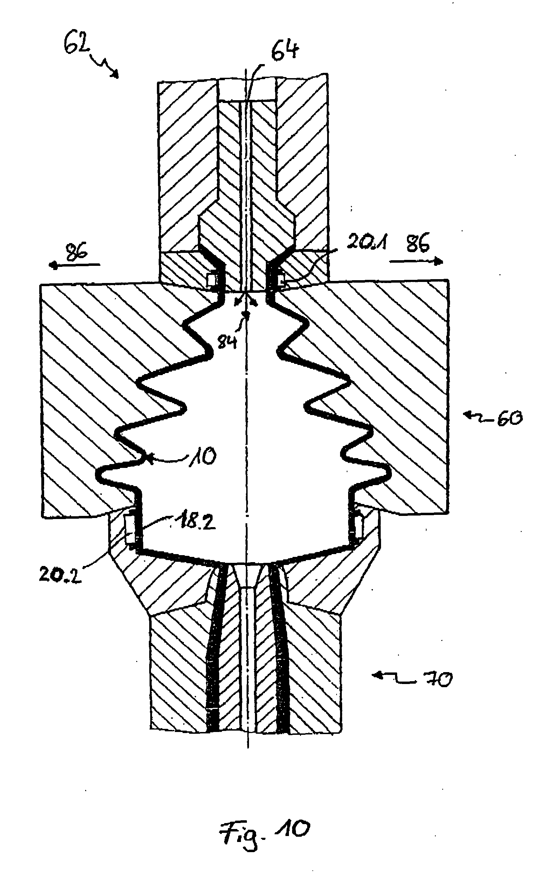

Fig. 10 zeigt in Schnittansicht die Spritzextrusionsvorrichtung 55 in geschlossener Form, wobei über den Blasdorn 64 Blasluft in Richtung der Pfeile 84 in das Innere des Vorformlings 78 zur Bildung eines Faltenbalgs 10, definiert durch die Außenkontur des Blasformwerkzeugs 60, geblasen wird. Hierdurch legt sich in dem gelenkseitigen Teil 20.2 zugewandten Bundbereich 18 des Faltenbalgs 10 das Kunststoffmaterial unmittelbar an das Spannband 20.2 zur Bildung einer einteiligen Verbindung mit diesem an. In Richtung der Pfeile 86 kann anschließen das Blasformwerkzeug 60 geöffnet und der fertige Faltenbalg 10 abgenommen werden. Eventuell überstehende Butzen oder Böden des Rohfaltenbalgs 10 werden abgeschnitten. Ebenso wie in dem in den Fig. 3 bis 5 gezeigten Pressblow-Spritzblasverfahren kann das Ziehen des Vorformlings 78 mit einer gezielt eingestellten Wanddickenverteilung über eine insbesondere elektronische Programmsteuerung erreicht werden.

Bei dem in den Fig. 3 bis 10 gezeigten Verfahren können zur Erzielung einer einteilig festen Verbindung Primer eingesetzt werden, welche insbesondere auf der Innenseite des Befestigungsmittels angebracht werden. Werden keine Primer verwendet, sind die Befestigungsmittel in der gebildeten Ringnut bewegbar, aber gleichwohl sicher gehalten.

Die vorliegende Erfindung stellt somit einen Faltenbalg sowie Verfahren zur Herstellung von Faltenbälgen zur Verfügung, welche durch die Vormontage von insbesondere Spannbändern auf mindestens einem Bundbereich eine einfachere Montage insbesondere auf Gelenkbauteilen ermöglichen, wobei zudem ein sicheres und gleichmäßig dichtendes Schließen der Spannbänder durch Angreifen eines Schließwerkzeugs sichergestellt ist.

## Patentansprüche

1. Verfahren zur Herstellung eines Faltenbalgs (10), wobei im Bereich einer ersten Einspannstelle (40, 56, 58) eines Verarbeitungswerkzeugs (32, 55) ein als Spannband. Kompressionsring oder Klemmschelle ausgebildetes Befestigungsmittel (20.1, 20.2) unmittelbar anliegend mit seiner Außenseite (28) an einer ersten Einspannstelle (40, 56, 58) angeordnet und nachfolgend der Faltenbalg (10) mit einem wellenseitigen und gelenkseitigen Bundbereich (18.1, 18.2) aus einem Kunststoffmaterial gebildet wird, wobei das Befestigungsmittel (20.1, 20.2) mit dem den Bundbereich (18.1, 18.2) bildenden Kunststoffmaterial in Kontakt kommt und von diesem teilweise umgeben wird, so dass die Ränder des als Spannband, Kompressionsring oder Klemmschelle ausgebildeten Befestigungsmittels (20.1. 20.2) entweder freiliegen oder teilweise mit Kunststoffmaterial umgeben sind.

2. Verfahren gemäß Anspruch 1, **dadurch gekennzeichnet, dass** zusätzlich an der Innenseite (22) des Befestigungsmittels (20.1. 20.2) ein erster Ring (59) aus einem elastomeren Material in der ersten Einspannstelle (40, 56, 58) angeordnet wird.

3. Verfahren gemäß einem der vorhergehenden Ansprüche, **dadurch gekennzeichnet, dass** ein weiteres Befestigungsmittel (20.1, 20.2) an seiner Außenseite (28) im Bereich des der ersten Einspannstelle (40, 56, 58) entgegengesetzten Teils des Verarbeitungswerkzeugs (32, 55) anliegend an eine zweite Einspannstelle (40, 56, 58) angeordnet wird.

4. Verfahren nach Anspruch 3, **dadurch gekennzeichnet, dass** zusätzlich an der Innenseite des weiteren Befestigungsmittels (20.1, 20.2) ein zweiter Ring (59) aus einem elastomeren Material angeordnet wird.

5. Verfahren gemäß einem der vorhergehenden Ansprüche, **dadurch gekennzeichnet, dass** dieses als Pressblow-Spritzblasverfahren, Spritzextrusionsverfahren, Spritzgussverfahren, Spritzpressverfahren und/oder als Extrusionsblasformverfahren durchgeführt wird.

6. Verfahren gemäß einem der vorhergehenden Ansprüche, **dadurch gekennzeichnet, dass** zur Erzielung einer einteilig festen Verbindung zwischen dem Befestigungsmittel und dem Bundbereich des Faltenbalgs ein Primer eingesetzt wird.

## Claims

1. A method of producing a gaiter (10), wherein in the region of a first clamping point (40, 56, 58) of a processing tool (32, 55) a fastening means (20.1, 20.2) constructed in the form of a tensioning belt, a compression ring or a gripping clamp is arranged with its outer side (28) resting directly against a first clamping point (40, 56, 58), and, after that, the gaiter (10) is formed with a collar region (18.1, 18.2) towards the shaft and towards the joint from a plastics material, wherein the fastening means (20.1, 20.2) comes into contact with the plastics material forming the collar region (18.1, 18.2) and is surrounded in part by the said plastics material, so that the edges of the fastening means (20.1, 20.2) constructed in the form of a tensioning belt, a compression ring or a gripping clamp are either exposed or surrounded in part with plastics material.

2. A method according to Claim 1, **characterized in that** in the first clamping point (40, 56, 58) a first ring (59) of an elastomer material is additionally arranged on the inner side (22) of the fastening means (20.1, 20.2).

3. A method according to one of the preceding Claims, **characterized in that** a further fastening means (20.1, 20.2) is arranged on its outer side (28) in the region of the part - opposite the first clamping point (40, 56, 58) - of the processing tool (32, 55) resting against a second clamping point (40, 56, 58).

4. A method according to Claim 3, **characterized in that** a second ring (59) of an elastomer material is additionally arranged on the inner side of the further fastening means (20.1, 20.2).

5. A method according to any one of the preceding Claims, **characterized in that** it is carried out in the form of a press-blow injection blow-moulding process, an injection / extrusion process, an injection-moulding process, an injection / pressing process and/ or in the form of an extrusion blow-moulding process.

6. A method according to any one of the preceding Claims, **characterized in that** a primer is used in order to achieve a firm one-piece join between the fastening means and the collar region of the gaiter.

## Revendications

1. Procédé de fabrication d'un soufflet (10), dans lequel, au niveau d'un premier point de serrage (40, 56, 58) d'un outil de traitement (32, 55), un moyen de fixation (20.1, 20.2) réalisé sous forme de bande de serrage, de bague de compression ou de collier de fixation, est disposé directement jointif avec son côté extérieur (28) contre un premier point de serrage (40, 56, 58), et ensuite, le soufflet (10) est formé à partir d'une matière plastique avec une zone de collet (18.1, 18.2) côté arbre et côté articulation, dans lequel le moyen de fixation (20.1, 20.2) entre en contact avec la matière plastique formant la zone de collet (18.1, 18.2) et est partiellement entouré de celle-ci, de sorte que les bords du moyen de fixation (20.1, 20.2) réalisé sous forme de bande de serrage, de bague de compression ou de collier de fixation sont libres ou partiellement entourés de matière plastique.

2. Procédé selon la revendication 1, **caractérisé en ce qu'**en plus, sur le côté intérieur (22) du moyen de fixation (20.1, 20.2), une première bague (59) d'un matériau élastomère est disposée au premier point de serrage (40, 56, 58).

3. Procédé selon l'une quelconque des revendications précédentes, **caractérisé en ce qu'**un moyen de fixation supplémentaire (20.1, 20.2) est disposé sur son côté extérieur (28) au niveau de la partie de l'outil de traitement (32, 55) opposée au premier point de serrage (40, 56, 58), contre un deuxième point de serrage (40, 56, 58).

4. Procédé selon la revendication 3, **caractérisé en ce qu'**en plus, sur le côté intérieur du moyen de fixation supplémentaire (20.1, 20.2), une deuxième bague (59) en matériau élastomère est disposée.

5. Procédé selon l'une quelconque des revendications précédentes, **caractérisé en ce qu'**il est exécuté comme un procédé d'injection-soufflage de type pressé-soufflé, un procédé d'injection-extrusion, un procédé de moulage par injection, d'un procédé de moulage par transfert et/ou comme un procédé d'extrusion-soufflage.

6. Procédé selon l'une quelconque des revendications précédentes, **caractérisé en ce que** pour obtenir un assemblage fixe d'un seul tenant entre le moyen de fixation et la zone de collet du soufflet, une couche de fond est mise en oeuvre.
